# EUROPEAN PATENT SPECIFICATION

(11) **EP 3 663 207 B1**
(45) Date of publication and mention of the grant of the patent: **24.01.2024**
(21) Application number: 19213443.5
(22) Date of filing: 04.12.2019
(51) Int. Cl.: B64D 29/06, F16C 11/04

(54) **GUIDED FAN COWL HINGE**
GEFÜHRTES SCHARNIER FÜR TRIEBWERKSVERKLEIDUNG
CHARNIÈRE GUIDÉE POUR CAPOT MOTEUR

(30) Priority: 04.12.2018 US 201816208897
(43) Date of publication of application: 10.06.2020
(73) Proprietor: Rohr, Inc., Chula Vista, CA 91910-2098 (US)
(72) Inventor: KHIONG, Neo Eng, 822122 Singapore (SG)
(74) Representative: Dehns

(56) References cited:
- EP-A1- 3 184 434
- US-A- 4 584 739
- US-A- 5 864 922
- US-A1- 2011 127 370
- US-A1- 2016 201 600

## Description

### FIELD

The present disclosure relates generally to gas turbine engines and, more particularly, to the design of fan cowl hinge systems for use with gas turbine engines configured for mounting to the fuselage of an aircraft.

### BACKGROUND

Modem aircraft may utilize one or more gas turbine engines. Such gas turbine engines may be housed in a nacelle, which may either be wing mounted, fuselage mounted, tail mounted, or some combination thereof. A nacelle typically comprises an inlet section, a thrust reverser section and a fan cowl. The fan cowl may include two sections, *e.g.*, an upper fan cowl and a lower fan cowl for a fuselage mounted nacelle. Typically, the upper fan cowl and the lower fan cowl are connected by hinge systems to a pylon or to a structure that is itself connected to the pylon. A latch system may be employed to lock the upper fan cowl to the lower fan cowl when closed about the gas turbine engine to form the nacelle. In various aircraft, such as, for example, business jets, the nacelles tend to be relatively long in an axial direction and of small diameter when sized against comparable engines hung from the underside of a wing. The length of the upper fan cowl and the lower fan cowl associated with such engines can result in difficulty when attempting to access the various components comprising the hinge systems, particularly the components positioned intermediate the entrance and exit sections of the nacelle. Various hinge systems, as described herein, may be used to alleviate such difficulty and, in addition, enable disassembly of the fan cowl components from the remainder of the gas turbine engine to facilitate maintenance and repair. A hinge assembly is disclosed in US 5,864,922.

### SUMMARY

A fan cowl assembly is provided as defined by claim 1.

In various embodiments, the first pin member is connected to one of the fan cowl and the inboard fan cowl section. In various embodiments, a second intermediate hinge is disposed between the forward hinge and the aft hinge, the second intermediate hinge including a second aperture and a second pin member extending in the longitudinal direction, the second aperture configured to receive the second pin member when the fan cowl is translated in the longitudinal direction with respect to the inboard fan cowl section. In various embodiments, the second pin member is connected to at least one of the fan cowl and the inboard fan cowl section. In various embodiments, the first pin member is connected to the fan cowl and the second pin member is connected to the fan cowl.

[DELETED]

In various embodiments, the aft hinge includes a third hinge element connected to the fan cowl and a fourth hinge element connected to the inboard fan cowl section. In various embodiments, a second locking member is configured to prevent the third hinge element from translating in the longitudinal direction with respect to the fourth hinge element when the fan cowl is assembled to the inboard fan cowl section.

[Deleted].

Deleted].

In various embodiments, a second fan cowl is connected to the inboard fan cowl section via a second hinge assembly, the second hinge assembly comprising: a second forward hinge, a second aft hinge spaced in the longitudinal direction from the second forward hinge, and a second intermediate hinge disposed between the second forward hinge and the second aft hinge, the second intermediate hinge including a second aperture and a second pin member extending in the longitudinal direction, the second aperture configured to receive the second pin member when the second fan cowl is translated in the longitudinal direction with respect to the inboard fan cowl section. In various embodiments, the first pin member is connected to at least one of the first fan cowl and the inboard fan cowl section and the second pin member is connected to one of the second fan cowl and the inboard fan cowl section.

In various embodiments, the first forward hinge includes a first forward hinge element connected to the first fan cowl and a second forward hinge element connected to the inboard fan cowl section and the second forward hinge includes a third forward hinge element connected to the second fan cowl and a fourth forward hinge element connected to the inboard fan cowl section.

In various embodiments, a first locking member is configured to prevent the first forward hinge element from translating in the longitudinal direction with respect to the second forward hinge element when the first fan cowl is assembled to the inboard fan cowl section and a second locking member configured to prevent the third forward hinge element from translating in the longitudinal direction with respect to the fourth forward hinge element when the second fan cowl is assembled to the inboard fan cowl section. In various embodiments, the first locking member is a first bolt configured to extend through the first forward hinge element and the second forward hinge element and the second locking member is a second bolt configured to extend through the third forward hinge element and the fourth forward hinge element.

[DELETED]

Also provided is a method as defined by claim 8.

In various embodiments, the method further includes the steps of: aligning a second fan cowl having a second hinge assembly positioned thereon with a second counterpart to the second hinge assembly positioned on the inboard fan cowl; translating the second fan cowl in the longitudinal direction to engage the second hinge assembly with the second counterpart to the second hinge assembly; and locking the second hinge assembly to the second counterpart to the second hinge assembly to prevent the second fan cowl from translating in the longitudinal direction with respect to the inboard fan cowl.

### BRIEF DESCRIPTION OF THE DRAWINGS

The subject matter of the present disclosure is particularly pointed out and distinctly claimed in the appended claims. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates an aircraft having fuselage mounted engines, in accordance with various embodiments;
FIG. 1B illustrates a schematic view of a nacelle surrounding a gas turbine engine, in accordance with various embodiments;
FIG. 2A illustrates a perspective view of a fan cowl in a closed position, in accordance with various embodiments;
FIG. 2B illustrates a perspective view of a fan cowl in an open position, in accordance with various embodiments;
FIGS. 3A and 3B illustrate a perspective and side views of a fan cowl in an open position, in accordance with various embodiments;
FIGS. 4A, 4B and 4C illustrate an intermediate hinge assembly, in accordance with various embodiments;
FIGS. 4D, 4E, 4F and 4G illustrate a forward or aft hinge assembly, in accordance with various embodiments;
FIGS. 5A, 5B and 5C illustrate various stages of assembly while assembling an upper or lower fan cowl to an inboard fan cowl section; and
FIG. 6 describes a method whereby a first or second fan cowl may be attached to an inboard fan cowl section.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

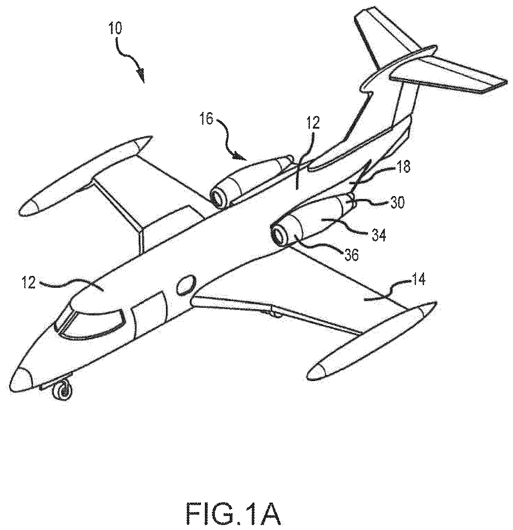

Referring now to the drawings, FIG. 1A schematically illustrates an aircraft 10, in accordance with various embodiments. The aircraft 10 generally includes a fuselage 12 extending the length of the aircraft 10. A wing 14 is attached to and extends from respective sides of the fuselage 12. A gas turbine engine 16 likewise is attached to and extends from respective sides of the fuselage 12. In various embodiments, the gas turbine engine 16 is attached to the fuselage 12 via a pylon 18. Further, in various embodiments, the gas turbine engine 16 includes a fan cowl assembly 34, an inlet section 36 and a thrust reverser 30.

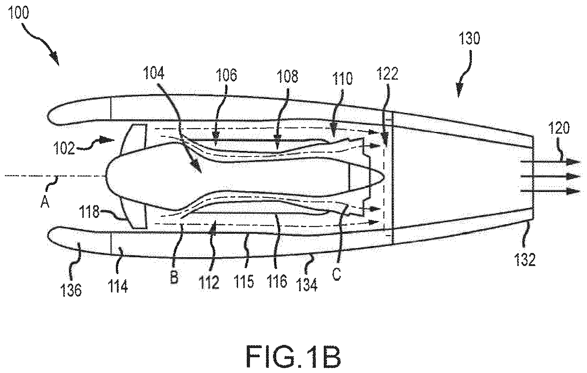

With continued reference to the drawings, FIG. 1B schematically illustrates a gas turbine engine 100 of the turbofan variety, similar to the gas turbine engine 16 described above with reference to FIG. 1A. The gas turbine engine 100 generally includes a fan section 102 and a core engine section 104, which includes a compressor section 106, a combustor section 108 and a turbine section 110. The fan section 102 drives air along a bypass flow path B in a bypass duct 112 defined within a radially inner surface 115 of a nacelle 114 and an outer casing 116 of the core engine section 104, while the compressor section 106 drives air along a core flow path C of the core engine section 104 for compression and communication into the combustor section 108 and then expansion through the turbine section 110.

The core engine section 104 may generally include a low speed spool and a high speed spool mounted for rotation about a central longitudinal axis A. The low speed spool generally includes an inner shaft that interconnects a fan 118 within the fan section 102, a low pressure compressor within the compressor section 106 and a low pressure turbine within the turbine section 110. The inner shaft may be connected to the fan 118 through a speed change mechanism or gear box to drive the fan 118 at a lower rotational speed than the rotational speed of the low speed spool. The high speed spool generally includes an outer shaft that interconnects a high pressure compressor within the compressor section 106 and a high pressure turbine within the turbine section 110. A combustor is arranged in the combustor section 108 between the high pressure compressor and the high pressure turbine. The air passing through the bypass flow path B mixes with the combustion gases exiting the core flow path C in a mixing section 122 positioned downstream of the core engine section 104 prior to discharge as a mixed exhaust stream 120, which provides the thrust achieved by the gas turbine engine 100.

In various embodiments, a thrust reverser 130 is mounted to the aft end of the gas turbine engine 100. The thrust reverser 130 includes a generally annular exhaust duct 132, which defines an outer boundary for discharging the mixed exhaust stream 120 when the thrust reverser 130 assumes a closed, stowed or retracted position, as illustrated in FIG. 1B. In various embodiments, the nacelle 114 includes a fan cowl assembly 134 that surrounds the core engine section 104. The fan cowl assembly 134 is generally positioned upstream of the thrust reverser 130 and downstream of an inlet section 136. As described further below, in various embodiments, the fan cowl assembly 134 is configured for opening to provide access to the core engine section 104 and to other components of the gas turbine engine 100. In various embodiments, the fan cowl assembly 134, the thrust reverser 130 and the inlet section 136, are similar to the fan cowl assembly 34, the thrust reverser 30 and the inlet section 36, respectively, described above with reference to FIG. 1A.

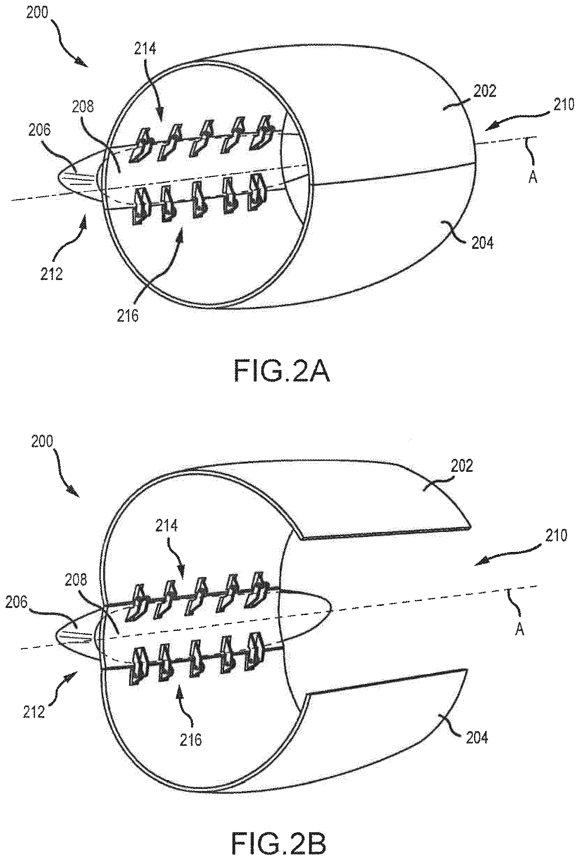

With combined reference to FIGS. 2A and 2B, a fan cowl assembly 200 for a gas turbine engine, such as, for example, the fan cowl assembly 134 described above with reference to FIG. 1B, is illustrated according to various embodiments. The fan cowl assembly 200 may include an upper fan cowl 202 (or a first fan cowl) and a lower fan cowl 204 (or a second fan cowl). In various embodiments, the fan cowl assembly 200 may at least partially enclose a gas turbine engine, such as, for example, the gas turbine engine 100 described above with reference to FIG. 1B. The fan cowl assembly 200 may extend along a central longitudinal axis A. In various embodiments, the central longitudinal axis A may be co-axial with the central longitudinal axis A described above with reference to FIG. 1B. The fan cowl assembly 200 may also be coupled to a pylon 206, configured to mount the gas turbine engine to a fuselage 12 of an aircraft, such as, for example, the fuselage 12, described above with reference to FIG. 1A.

In various embodiments, the upper fan cowl 202 and the lower fan cowl 204 may each define an outboard side 210 of the fan cowl assembly 200 that is configured to provide an opening for access to the engine. In various embodiments, the upper fan cowl 202 and the lower fan cowl 204 may each define an inboard side 212 that is configured for connecting to or proximate the pylon 206. In various embodiments, an upper hinge assembly 214 (or a first hinge assembly) is used to connect the upper fan cowl 202 to an inboard fan cowl section 208 that is itself connected to the pylon 206. In various embodiments, a lower hinge assembly 216 (or a second hinge assembly) is used to connect the lower fan cowl 204 to the inboard fan cowl section 208. The upper hinge assembly 214 and the lower hinge assembly 216 are configured to permit the upper fan cowl 202 and the lower fan cowl 204, respectively, to pivot from a closed configuration, as illustrated in FIG. 2A, to an open configuration, as illustrated in FIG. 2B. While the fan cowl assembly 200 described above and illustrated in FIGS. 2A and 2B extends laterally outward from the pylon 206, which is itself coupled to an aircraft fuselage, the disclosure contemplates other orientations, such as, for example, orientations where the fan cowl assembly 200 is connected to a pylon situated under a wing of an aircraft. In such orientations, for example, the upper and lower fan cowls, described above, may be described, in various embodiments, as left and right fan cowls (or first and second fan cowls) or, similarly, as inboard and outboard fan cowls.

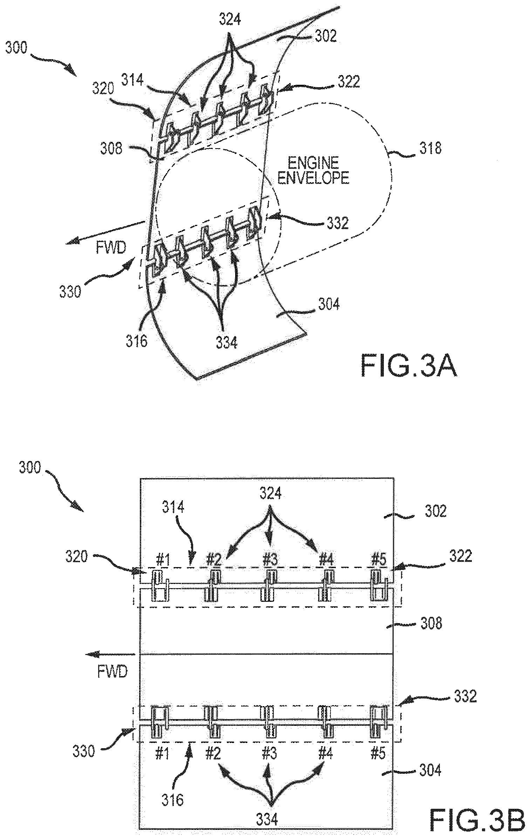

Referring now to FIGS. 3A and 3B, schematic perspective and side views of a fan cowl assembly 300 are provided, in accordance with various embodiments. Like the fan cowl assembly 200 described above with reference to FIGS. 2A and 2B, the fan cowl assembly 300 includes an upper fan cowl 302 (or a first fan cowl), a lower fan cowl 304 (or a second fan cowl) and an inboard fan cowl section 308. In various embodiments, an upper hinge assembly 314 (or a first hinge assembly) is used to connect the upper fan cowl 302 to the inboard fan cowl section 308 that may be connected to a pylon, such as, for example, the pylon 206 described above with reference to FIGS. 2A and 2B. In various embodiments, a lower hinge assembly 316 (or a second hinge assembly) is used to connect the lower fan cowl 304 to the inboard fan cowl section 308. The upper hinge assembly 314 and the lower hinge assembly 316 are configured to permit the upper fan cowl 302 and the lower fan cowl 304, respectively, to pivot between closed and opened configurations, as described above with reference to FIGS. 2A and 2B. As illustrated schematically in FIG. 3A, the upper fan cowl 302 and the lower fan cowl 304 are configured to define an engine envelope 318 that surrounds a gas turbine engine when in the closed position, as illustrated in FIG. 2A, and enable access to the gas turbine engine when in the open position, as illustrated in FIGS. 2B. In various embodiments, the gas turbine engine referred to above is similar to the gas turbine engine 100 described above with reference to FIG. 1B.

Referring still to FIGS. 3A and 3B, the upper hinge assembly 314 may comprise, in accordance with various embodiments, an upper forward hinge 320 (or a first forward hinge) and an upper aft hinge 322 (or a first aft hinge). Intermediate the upper forward hinge 320 and the upper aft hinge 322 is one or more upper intermediate hinges 324. Similarly, the lower hinge assembly 316 may comprise, in accordance with various embodiments, a lower forward hinge 330 (or a second forward hinge) and a lower aft hinge 332 (or a second aft hinge). Intermediate the lower forward hinge 330 and the lower aft hinge 332 is one or more lower intermediate hinges 334. As will be described further below, in various embodiments, the various forward, aft and intermediate hinges described above may be configured to enable the upper fan cowl 302 and the lower fan cowl 304 to be opened and closed, as described above, and also to be removed from the inboard fan cowl section 308.

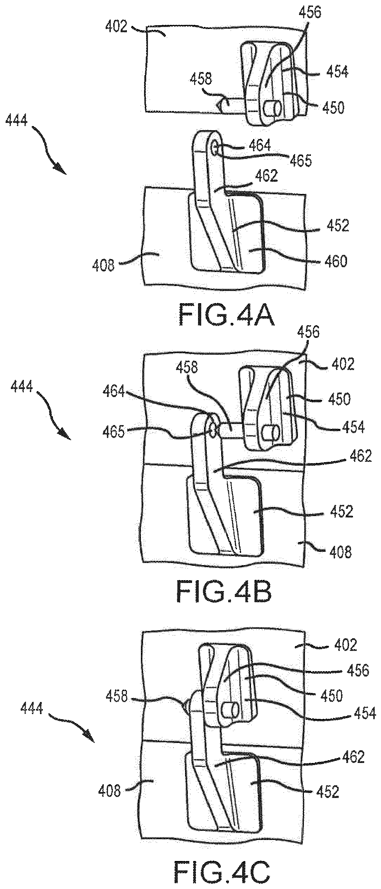

Referring now to FIGS. 4A, 4B and 4C, schematic views of an intermediate hinge 444, such as, for example, one of the one or more upper intermediate hinges 324 described above with reference to FIGS. 3A and 3B are provided. As illustrated in FIGS. 3A and 3B, in various embodiments, each of the one or more lower intermediate hinges 334 is a mirror image of each of the one or more upper intermediate hinges 324. Accordingly, related principles of the present disclosure may be conveyed by describing a single intermediate hinge, such as, for example, the intermediate hinge 444 depicted in FIGS. 4A-4C. In various embodiments, the intermediate hinge 444 comprises a clevis 450 and a hinge element 452 (or a counterpart to the clevis 450). In various embodiments, the clevis 450 includes a base portion 454 configured for mounting to an upper fan cowl 402, such as, for example, the upper fan cowl 302 described above with reference to FIGS. 3A and 3B, and a tab portion 456 that extends from the base portion 454 and that includes a pin member 458 extending in a forward direction (or longitudinal direction) (see FIGS. 3A and 3B) with respect to a longitudinal axis, such as, for example, the central longitudinal axis A described above with reference to FIGS. 2A and 2B. Similarly, the hinge element 452 includes a base portion 460 configured for mounting to an inboard fan cowl section 408, such as, for example, the inboard fan cowl section 308 described above with reference to FIGS. 3A and 3B, and a tab portion 462 that extends from the base portion 460 and that includes an aperture 464 configured to receive the pin member 458 extending in the forward direction. In various embodiments, the pin member 458 and the aperture 464 are configured to enable the clevis 450 to slidably engage with the hinge element 452 - e.g., from a disengaged position, as illustrated in FIG. 4A, to an aligned position, as illustrated in FIG. 4B, to an engaged position, as illustrated in FIG. 4C, and to pivot with respect to one another while in the engaged position. In various embodiments, the aperture 464 may comprise a bearing 465 (*e.g.,* a spherical bearing) or a sleeve to aid in pivoting the clevis 450 with respect to the hinge member 452.

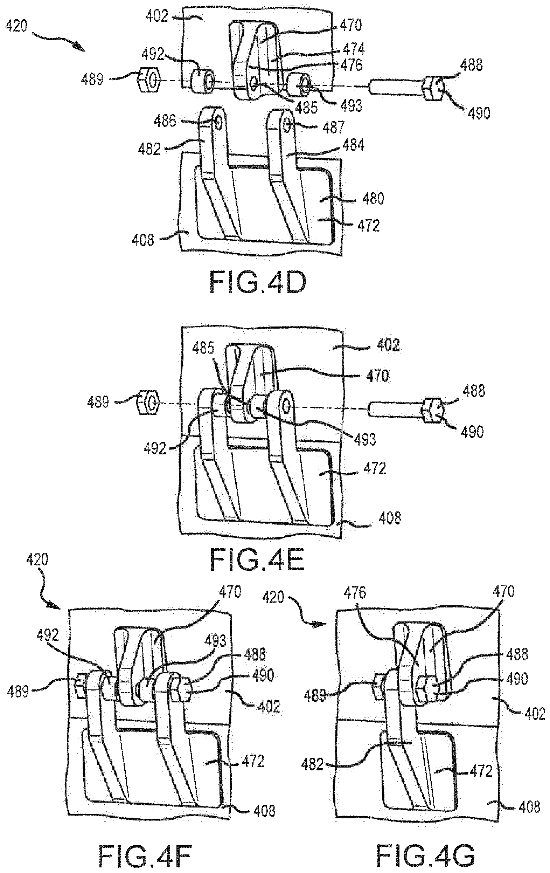

Referring now to FIGS. 4D, 4E and 4F, schematic views of an upper forward hinge 420, such as, for example, the upper forward hinge 320 described above with reference to FIGS. 3A and 3B are provided. As illustrated in FIGS. 3A and 3B, in various embodiments, the upper forward hinge 320 and the upper aft hinge 322 are identical, and each of the lower forward hinge 330 and the lower aft hinge 332 is a mirror image of the respective upper forward and upper aft hinge counterparts. Accordingly, related principles of the present disclosure may be conveyed by describing a single forward or aft hinge, such as, for example, the upper forward hinge 420 depicted in FIGS. 4D-4F. In various embodiments, the upper forward hinge 420 comprises a first hinge element 470 and a second hinge element 472 (or a counterpart to the first hinge element 470). In various embodiments, the first hinge element 470 includes a first base portion 474 configured for mounting to the upper fan cowl 402, and a first tab portion 476 that that extends from the first base portion 474. Similarly, the second hinge element 472 includes a second base portion 480 configured for mounting to the inboard fan cowl section 408, and a second tab portion 482 and, in various embodiments, a third tab portion 484, that extends from the second base portion 480.

In various embodiments, the first tab portion 476 includes a first aperture 485 extending there through, the second tab portion 482 includes a second aperture 486 extending there through, and, if present, the third tab portion 484 includes a third aperture 487 extending there through. In various embodiments, the second tab portion 482 and, if present, the third tab portion 484 are spaced a distance from one another to enable the first tab portion 476 to slide forward and aft between the second tab portion 482 and the third tab portion 484. In various embodiments, a pin member 490, such as, for example, a bolt 488, is configured to be received by the first aperture 485 and by the second aperture 486 and the third aperture 487 (see FIG. 4F) and a nut 489 is threaded onto the bolt 488 to prevent movement in the forward or the aft directions of the upper fan cowl 402 with respect to the inboard fan cowl section 408 when the upper fan cowl 402 assumes an engaged position, for example, as illustrated in FIG. 2B. Similar to the description regarding assembly, above, in various embodiments, the first hinge element 470 engages with the second hinge element 472 - *e.g.,* from a disengaged position, as illustrated in FIG. 4D, to an aligned position, as illustrated in FIG. 4E, to an engaged position, as illustrated in FIG. 4F (and in FIG. 4G). The pin member 490 enables the first hinge element 470 to pivot with respect to the second hinge element 472 while preventing translational movement between the two when assuming the engaged position. Once assembled, the combination of the pin member 490 and either the first hinge element 470 or the second hinge element 472 comprise a clevis, which functions similarly to the clevis 450 (and the hinge element 452) described above with reference to FIGS. 4A-4C. In various embodiments (see FIG. 4F), a first spacer 492 and a second spacer 493 may be positioned on either side of the first tab portion 476 to prevent translational movement between the first hinge element 470 and the second hinge element 472 when assuming the engaged position. In various embodiments (see FIG. 4G), the third tab portion 484 is not included in the second hinge element 472 and the pin member 490 may be used to pivotably connect the first tab portion 476 directly to the second tab portion 482 without need of the first spacer 492 or the second spacer 493.

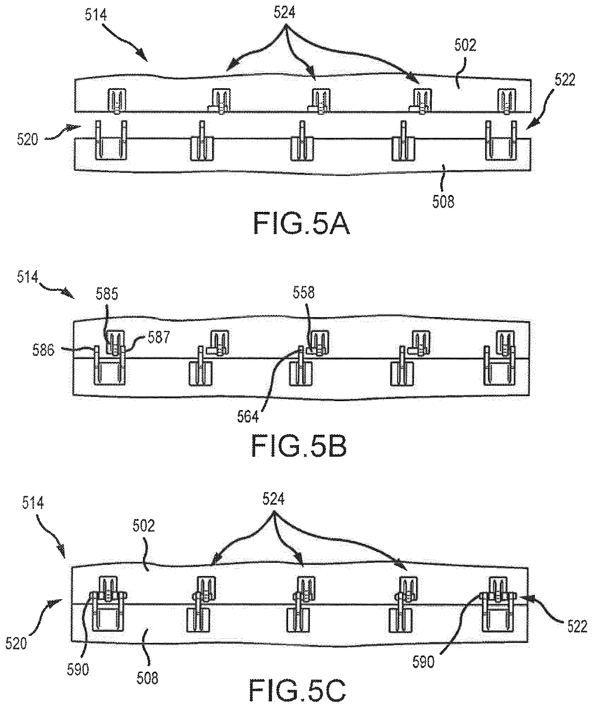

Referring now to FIGS. 5A, 5B and 5C, an upper hinge assembly 514 is illustrated in various stages, while assembling an upper fan cowl 502 to an inboard fan cowl 508. In various embodiments, the upper hinge assembly 514 includes an upper forward hinge 520 (or a forward hinge) and an upper aft hinge 522 (or an aft hinge). Intermediate the upper forward hinge 520 and the upper aft hinge 522 is one or more upper intermediate hinges 524 (or an intermediate hinge or hinges). The upper forward hinge 520 and the upper aft hinge 522, and the one or more upper intermediate hinges 524, respectively, share the structural characteristics of the upper forward hinge 420 and the intermediate hinge 444, described above with reference to FIGS. 4A-4G.

Referring to FIG. 5A, the upper fan cowl 502 is illustrated in a detached position from the inboard fan cowl 508. This position is consistent with the upper fan cowl 202 being detached and removed from the inboard fan cowl section 208 described above with reference to FIGS. 2A and 2B. Referring to FIG. 5B, the upper hinge assembly 514 is illustrated in an aligned position, similar to that described above with reference to FIGS. 4B and 4E, where each of the one or more upper intermediate hinges 524 includes a pin member 558 aligned with an aperture 564 configured to receive the pin member 558 and where each of the upper forward hinge 520 and the upper aft hinge 522 includes at least a first aperture 585 aligned with a second aperture 586 (and, if included, a third aperture 587) and configured to receive a pin member 590. Referring to FIG. 5C, the upper fan cowl 502 is illustrated in an attached position to the inboard fan cowl 508. To reach the attached position, the upper fan cowl 502, together with the upper hinge components attached thereto, is translated from the aligned position illustrated in FIG. 5B, until each pin member 558 is received by each aperture 564 for the one or more upper intermediate hinges 524. Following each pin member 558 being received within each aperture 564, the pin member 590 associated with each of the upper forward hinge 520 and the upper aft hinge 522 is engaged with the respective first aperture 585 and second aperture 586 (and, if included, the third aperture 587) and locked to prevent translation of the upper fan cowl 502 with respect to the inboard fan cowl 508 in the forward or aft direction, while allowing the same components to pivot with respect to one another.

The disclosure contemplates various embodiments, other than those expressly described above. In various embodiments, for example, rather than the pin member 458 for each intermediate hinge 444 being attached to the upper fan cowl 402, the pin member 458 for each such hinge may be attached to the inboard fan cowl section 408. In various embodiments, various of the intermediate hinges may have the pin member attached to the upper fan cowl 402 and various of the intermediate hinges may have the pin member attached to the inboard fan cowl section 408. These latter embodiments may be realized by simply rotating the intermediate hinge 444 described in FIGS. 4A-4C such that the first hinge member 450 is positioned on the inboard fan cowl section 408 and the second hinge member 452 is positioned on the upper fan cowl 402. In addition, while the disclosure describes various embodiments in terms of lower and upper components or forward and aft components, there is no such preferred orientation. In other words, an upper component may be described as a first component without loss of generality, and, similarly, a lower component may be described as a second component. The same applies to forward and aft components.

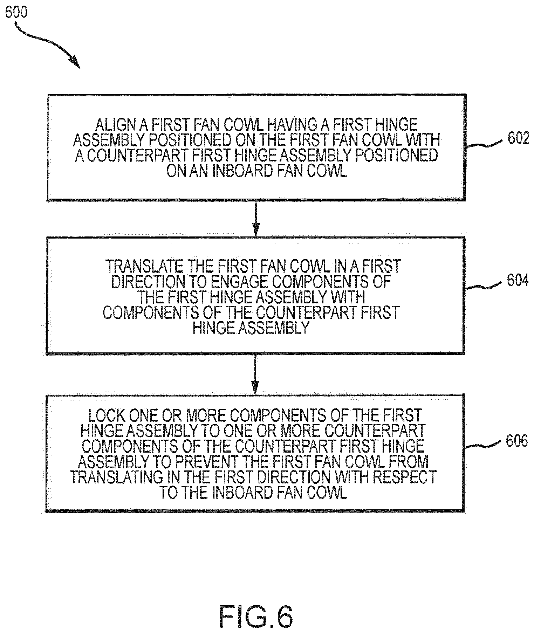

Referring now to FIG. 6, a method 600 is described whereby a first or second fan cowl may be attached to an inboard fan cowl section. In a first step 602, a first fan cowl having a first hinge assembly positioned on the first fan cowl is aligned with a counterpart to the first hinge assembly positioned on the inboard fan cowl section. In various embodiments, the combination of the first hinge assembly positioned on the first fan cowl and the counterpart to the first hinge assembly positioned on the inboard fan cowl section is equivalent to the upper hinge assembly 214 described above with reference to FIGS. 2A and 2B. In a second step 604, the first fan cowl is translated in a first direction to engage components of the first hinge assembly positioned on the first fan cowl with components of the counterpart first hinge assembly positioned on the inboard fan cowl section. In a third step 606, one or more components of the first hinge assembly are locked to one or more counterpart components of the counterpart first hinge assembly to prevent the first fan cowl from translating in the first direction with respect to the inboard fan cowl section. A similar process may be employed to attach a second fan cowl section to the inboard fan cowl section. Finally, either one or both of the first fan cowl or the second fan cowl may be detached and removed from the inboard fan cowl section by reversing the order of the steps described above.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

In various embodiments, system program instructions or controller instructions may be loaded onto a tangible, non-transitory, computer-readable medium (also referred to herein as a tangible, non-transitory, memory) having instructions stored thereon that, in response to execution by a controller, cause the controller to perform various operations.

Finally, any of the above described concepts can be used alone or in combination with any or all of the other above described concepts. Although various embodiments have been disclosed and described, one of ordinary skill in this art would recognize that certain modifications would come within the scope of the invention as defined by the claims. Accordingly, the description is not intended to be exhaustive or to limit the principles described or illustrated herein to any precise form and the scope of the invention is defined by the claims.

## Claims

1. A fan cowl assembly (300) comprising:
a fan cowl (304) and an inboard fan cowl section (308);
a hinge assembly comprising a forward hinge (320);
an aft hinge (322) spaced a distance in a longitudinal direction from the forward hinge; and
a first intermediate hinge (324) disposed between the forward hinge and the aft hinge, the first intermediate hinge including a first aperture (464) and a first pin member (458) extending in the longitudinal direction, the first aperture configured to receive the first pin member when the fan cowl is translated in the longitudinal direction with respect to the inboard fan cowl section;
wherein the forward hinge includes a first hinge element connected to the fan cowl and a second hinge element connected to the inboard fan cowl section; and
further comprising a first locking member (488) configured to prevent the first hinge element from translating in the longitudinal direction with respect to the second hinge element when the fan cowl is assembled to the inboard fan cowl section; and **characterized in that**
the first locking member is a first bolt configured to extend through the first hinge element and the second hinge element.

2. The fan cowl assembly of claim 1, wherein the first pin member is connected to one of the fan cowl and the inboard fan cowl section.

3. The fan cowl assembly of claim 2, further comprising a second intermediate hinge disposed between the forward hinge and the aft hinge, the second intermediate hinge including a second aperture and a second pin member extending in the longitudinal direction, the second aperture configured to receive the second pin member when the fan cowl is translated in the longitudinal direction with respect to the inboard fan cowl section.

4. The fan cowl assembly of claim 3, wherein the second pin member is connected to at least one of the fan cowl and the inboard fan cowl section.

5. The fan cowl assembly of claim 4, wherein the first pin member is connected to the fan cowl and the second pin member is connected to the fan cowl.

6. The fan cowl assembly of any preceding claim, wherein the aft hinge includes a third hinge element connected to the fan cowl and a fourth hinge element connected to the inboard fan cowl section.

7. The fan cowl assembly of claim 6, further comprising a second locking member configured to prevent the third hinge element from translating in the longitudinal direction with respect to the fourth hinge element when the fan cowl is assembled to the inboard fan cowl section.

8. A method of assembling a fan cowl assembly, comprising:
aligning a first fan cowl having a first hinge assembly comprising a first forward hinge,
a first aft hinge spaced in the longitudinal direction from the first forward hinge, and
a first intermediate hinge disposed between the first forward hinge and the first aft hinge, the first forward hinge including a first hinge element positioned thereon with a first counterpart to the first hinge element positioned on an inboard fan cowl;
translating the first fan cowl in a longitudinal direction to engage the first hinge element with the first counterpart to the first hinge element; and locking the first hinge element to the first counterpart to the first hinge element to prevent the first fan cowl from translating in the longitudinal direction with respect to the inboard fan cowl;
the first intermediate hinge including a first aperture and a first pin member extending in the longitudinal direction, the first aperture configured to receive the first pin member when the first fan cowl is translated in the longitudinal direction with respect to the inboard fan cowl; and
**characterized in that** the first locking member is a bolt.

9. The method of claim 8, further comprising:
aligning a second fan cowl having a second hinge assembly comprising a second forward hinge,
a second aft hinge spaced in the longitudinal direction from the second forward hinge, and
a second intermediate hinge disposed between the second forward hinge and the second aft hinge, the second forward hinge including a second hinge element positioned thereon with a second counterpart to the second hinge element positioned on the inboard fan cowl;
translating the second fan cowl in the longitudinal direction to engage the second hinge element with the second counterpart to the second hinge element; and
locking the second hinge element to the second counterpart to the second hinge element to prevent the second fan cowl from translating in the longitudinal direction with respect to the inboard fan cowl.

## Patentansprüche

1. Lüfterhaubenbaugruppe (300), umfassend:
eine Lüfterhaube (304) und einen inneren Lüfterhaubenabschnitt (308) ;
eine Scharnierbaugruppe, die ein vorderes Scharnier (320) umfasst;
ein hinteres Scharnier (322), das in Längsrichtung in einem Abstand entfernt von dem vorderen Scharnier angeordnet ist; und ein erstes Zwischenscharnier (324), das zwischen dem vorderen Scharnier und dem hinteren Scharnier angeordnet ist, wobei das erste Zwischenscharnier eine erste Öffnung (464) und ein erstes Stiftelement (458) beinhaltet, das sich in Längsrichtung erstreckt, wobei die erste Öffnung dazu ausgelegt ist, das erste Stiftelement aufzunehmen, wenn die Lüfterhaube in Bezug auf den inneren Lüfterhaubenabschnitt in Längsrichtung verschoben wird; wobei das vordere Scharnier ein erstes Scharnierelement beinhaltet, das mit der Lüfterhaube verbunden ist, und ein zweites Scharnierelement, das mit dem inneren Lüfterhaubenabschnitt verbunden ist; und
ferner umfassend ein erstes Verriegelungselement (488), das dazu ausgelegt ist, zu verhindern, dass sich das erste Scharnierelement in Bezug auf das zweite Scharnierelement in Längsrichtung verschiebt, wenn die Lüfterhaube am inneren Lüfterhaubenabschnitt montiert wird; und **dadurch gekennzeichnet, dass**
das erste Verriegelungselement ein erster Bolzen ist, der dazu ausgelegt ist, sich durch das erste Scharnierelement und das zweite Scharnierelement zu erstrecken.

2. Lüfterhaubenbaugruppe nach Anspruch 1, wobei das erste Stiftelement mit einem von der Lüfterhaube und dem inneren Lüfterhaubenabschnitt verbunden ist.

3. Lüfterhaubenbaugruppe nach Anspruch 2, ferner umfassend ein zweites Zwischenscharnier, das zwischen dem vorderen Scharnier und dem hinteren Scharnier angeordnet ist, wobei das zweite Zwischenscharnier eine zweite Öffnung und ein zweites Stiftelement beinhaltet, das sich in Längsrichtung erstreckt, wobei die zweite Öffnung dazu ausgelegt ist, das zweite Stiftelement aufzunehmen, wenn die Lüfterhaube in Bezug auf den inneren Lüfterhaubenabschnitt in Längsrichtung verschoben wird.

4. Lüfterhaubenbaugruppe nach Anspruch 3, wobei das zweite Stiftelement mit einem von der Lüfterhaube und dem inneren Lüfterhaubenabschnitt verbunden ist.

5. Lüfterhaubenbaugruppe nach Anspruch 4, wobei das erste Stiftelement mit der Lüfterhaube verbunden ist und das zweite Stiftelement mit der Lüfterhaube verbunden ist.

6. Lüfterhaubenbaugruppe nach einem der vorhergehenden Ansprüche, wobei das hintere Scharnier ein drittes Scharnierelement beinhaltet, das mit der Lüfterhaube verbunden ist, und ein viertes Scharnierelement, das mit dem inneren Lüfterhaubenabschnitt verbunden ist.

7. Lüfterhaubenbaugruppe nach Anspruch 6, ferner umfassend ein zweites Verriegelungselement, das dazu ausgelegt ist, zu verhindern, dass sich das dritte Scharnierelement in Bezug auf das vierte Scharnierelement in Längsrichtung verschiebt, wenn die Lüfterhaube am inneren Lüfterhaubenabschnitt montiert wird.

8. Verfahren zum Zusammenbauen einer Lüfterhaubenbaugruppe, umfassend:
Ausrichten einer ersten Lüfterhaube mit einer ersten Scharnierbaugruppe, umfassend
ein erstes vorderes Scharnier,
ein erstes hinteres Scharnier, das in Längsrichtung in einem Abstand von dem ersten vorderen Scharnier angeordnet ist, und ein erstes Zwischenscharnier, das zwischen dem ersten vorderen Scharnier und dem ersten hinteren Scharnier angeordnet ist, wobei das erste vordere Scharnier ein darauf positioniertes erstes Scharnierelement mit einem ersten Gegenstück zu dem ersten Scharnierelement beinhaltet, das auf einer inneren Lüfterhaube positioniert ist;
Verschieben der ersten Lüfterhaube in Längsrichtung, um das erste Scharnierelement mit dem ersten Gegenstück zu dem ersten Scharnierelement in Eingriff zu bringen; und
Verriegeln des ersten Scharnierelements an dem ersten Gegenstück zu dem ersten Scharnierelement, um zu verhindern, dass sich die erste Lüfterhaube in Bezug auf die innere Lüfterhaube in Längsrichtung verschiebt;
wobei das erste Zwischenscharnier eine erste Öffnung und ein erstes Stiftelement beinhaltet, das sich in Längsrichtung erstreckt, wobei die erste Öffnung dazu ausgelegt ist, das erste Stiftelement aufzunehmen, wenn die erste Lüfterhaube in Bezug auf die innere Lüfterhaube in Längsrichtung verschoben wird; und **dadurch gekennzeichnet, dass** das erste Verriegelungselement ein Bolzen ist.

9. Verfahren nach Anspruch 8, ferner umfassend:
Ausrichten einer zweiten Lüfterhaube mit einer zweiten Scharnierbaugruppe, umfassend
ein zweites vorderes Scharnier,
ein zweites hinteres Scharnier, das in Längsrichtung in einem Abstand von dem zweiten vorderen Scharnier angeordnet ist, und ein zweites Zwischenscharnier, das zwischen dem zweiten vorderen Scharnier und dem zweiten hinteren Scharnier angeordnet ist, wobei das zweite vordere Scharnier ein darauf positioniertes zweites Scharnierelement mit einem zweiten Gegenstück zu dem zweiten Scharnierelement beinhaltet, das an der inneren Lüfterhaube positioniert ist;
Verschieben der zweiten Lüfterhaube in Längsrichtung, um das zweite Scharnierelement mit dem zweiten Gegenstück zu dem zweiten Scharnierelement in Eingriff zu bringen; und
Verriegeln des zweiten Scharnierelements an dem zweiten Gegenstück zu dem zweiten Scharnierelement, um zu verhindern, dass sich die zweite Lüfterhaube in Bezug auf die innere Lüfterhaube in Längsrichtung verschiebt.

## Revendications

1. Ensemble capot moteur (300) comprenant :
un capot moteur (304) et une section de capot moteur intérieure (308) ;
un ensemble charnière comprenant une charnière avant (320) ;
une charnière arrière (322) espacée d'une distance dans une direction longitudinale à partir de la charnière avant ; et
une première charnière intermédiaire (324) disposée entre la charnière avant et la charnière arrière, la première charnière intermédiaire comprenant une première ouverture (464) et un premier élément de broche (458) s'étendant dans la direction longitudinale, la première ouverture étant configurée pour recevoir le premier élément de broche lorsque le capot moteur est déplacé dans la direction longitudinale par rapport à la section de capot moteur intérieure ;
dans lequel la charnière avant comprend un premier élément de charnière relié au capot moteur et un deuxième élément de charnière relié à la section de capot moteur intérieure ; et
comprenant également un premier élément de verrouillage (488) configuré pour empêcher le premier élément de charnière de se déplacer dans la direction longitudinale par rapport au deuxième élément de charnière lorsque le capot moteur est assemblé à la section de capot moteur intérieure ; et **caractérisé en ce que**
le premier élément de verrouillage est un premier boulon configuré pour s'étendre à travers le premier élément de charnière et le deuxième élément de charnière.

2. Ensemble capot moteur selon la revendication 1, dans lequel le premier élément de broche est relié à l'un parmi le capot moteur et la section de capot moteur intérieure.

3. Ensemble capot moteur selon la revendication 2, comprenant également une seconde charnière intermédiaire disposée entre la charnière avant et la charnière arrière, la seconde charnière intermédiaire comprenant une seconde ouverture et un second élément de broche s'étendant dans la direction longitudinale, la seconde ouverture étant configurée pour recevoir le second élément de broche lorsque le capot moteur est déplacé dans la direction longitudinale par rapport à la section de capot moteur intérieure.

4. Ensemble capot moteur selon la revendication 3, dans lequel le second élément de broche est relié à au moins l'un parmi le capot moteur et la section de capot moteur intérieure.

5. Ensemble capot moteur selon la revendication 4, dans lequel le premier élément de broche est relié au capot moteur et le second élément de broche est relié au capot moteur.

6. Ensemble capot moteur selon une quelconque revendication précédente, dans lequel la charnière arrière comprend un troisième élément de charnière relié au capot moteur et un quatrième élément de charnière relié à la section de capot moteur intérieure.

7. Ensemble capot moteur selon la revendication 6, comprenant également un second élément de verrouillage configuré pour empêcher le troisième élément de charnière de se déplacer dans la direction longitudinale par rapport au quatrième élément de charnière lorsque le capot moteur est assemblé à la section de capot moteur intérieure.

8. Procédé d'assemblage d'un ensemble capot moteur, comprenant :
l'alignement d'un premier capot moteur ayant un premier ensemble charnière comprenant
une première charnière avant,
une première charnière arrière espacée dans la direction longitudinale de la première charnière avant, et
une première charnière intermédiaire disposée entre la première charnière avant et la première charnière arrière, la première charnière avant comprenant un premier élément de charnière positionné sur celle-ci avec une première contrepartie du premier élément de charnière positionnée sur un capot moteur intérieur ;
le déplacement du premier capot moteur dans une direction longitudinale pour mettre en prise le premier élément de charnière avec la première contrepartie du premier élément de charnière ; et
le verrouillage du premier élément de charnière sur la première contrepartie du premier élément de charnière pour empêcher le premier capot moteur de se déplacer dans la direction longitudinale par rapport au capot moteur intérieur ;
la première charnière intermédiaire comprenant une première ouverture et un premier élément de broche s'étendant dans la direction longitudinale, la première ouverture étant configurée pour recevoir le premier élément de broche lorsque le premier capot moteur est déplacé dans la direction longitudinale par rapport au capot moteur intérieur ; et
**caractérisé en ce que** le premier élément de verrouillage est un boulon.

9. Procédé selon la revendication 8, comprenant également :
l'alignement d'un second capot moteur ayant un second ensemble charnière comprenant
une seconde charnière avant,
une seconde charnière arrière espacée dans la direction longitudinale de la seconde charnière avant, et
une seconde charnière intermédiaire disposée entre la seconde charnière avant et la seconde charnière arrière, la seconde charnière avant comprenant un deuxième élément de charnière positionné sur celle-ci avec une seconde contrepartie du deuxième élément de charnière positionnée sur le capot moteur intérieur ;
le déplacement du second capot moteur dans la direction longitudinale pour mettre en prise le deuxième élément de charnière avec la seconde contrepartie du deuxième élément de charnière ; et
le verrouillage du deuxième élément de charnière sur la seconde contrepartie du deuxième élément de charnière pour empêcher le second capot moteur de se déplacer dans la direction longitudinale par rapport au capot moteur intérieur.
